# EUROPÄISCHE PATENTANMELDUNG

(11) **EP 1 189 094 A1**
(43) Veröffentlichungstag der Anmeldung: **20.03.2002**
(21) Anmeldenummer: 00203425.4
(22) Anmeldetag: 03.10.2000
(51) Int. Cl.: G02C 9/00

(54) **Randlose optische Brille, die mittels Magneten in beiden nasenbrücken mit einem randlosen Sonnenclip verbunden werden kann**

(30) Priorität: 15.09.2000 AT 15652000
(71) Anmelder: Fa. Karl Strube, 2500 Baden (AT)
(72) Erfinder: Fa. Karl Strube, 2500 Baden (AT)

(57) **Zusammenfassung**

Optische Brillenstruktur bei der eine randlose optische Brille mit einem randlosen Sonnenclip verbunden wird ohne das Aussehen der Brille zu beeinträchtigen, da sowohl in die Nasenbrücke der optischen Brille als auch in die des randlosen Sonnenclips kreisrunde Magneten vollständig eingepreßt werden. Diese kleinen Magneten gewährleisten einen optimalen Halt durch eine sehr starke Magnetfeldstärke ohne aber dabei das Aussehen der Brille zu stören, da sie vollständig in die Fassung eingepreßt sind. Durch die schräg gebohrten Aufnahmen für die Magnete ist ein optisch schwungvolles Design der Nasenbrücken möglich. Ein zusätzlicher Ansatz zum Abstützen der Nasenbrücke des Sonnenclips auf der Nasenbrücke der optischen Brille verhindert ein geringfügiges Verrutschen.

## Beschreibung

### Grundlage der Erfindung

Die Erfindung bezieht sich darauf, wie man eine randlose optische Brille mit einer randlosen Sonnenbrille verbinden kann, ohne daß diese Ihr Aussehen verliert.

### Inhaltsangabe der Erfindung

Da jeder Brillenträger das Problem kennt, eine Sonnenbrille zu tragen ohne auf die Sehqualität der optischen Brille verzichten zu müssen, haben wir hiermit versucht diesem Problem Abhilfe zu schaffen, ohne die Form der Brille zu zerstören.

Wir haben randlose Brillen entwickelt, die in der Nasenbrücke runde Magnete mit kleinen Abmessungen eingearbeitet haben. Auf diese randlosen Brillen kann nun ein, ebenfalls randloser Sonnenclip aufgesetzt werden, der eigentlich nur aus den Sonnenlinsen und einer Nasenbrücke, die die Gegenstücke der Magnete eingarbeitet hat, besteht.

Die Form der Scheiben des Sonnenclips ist der Form der Scheiben der optischen Brille komplett angepaßt und es stört somit das Aussehen der Brille in keiner Weise, wenn der Sonnenclip aufgesetzt wird. Die optische Brille ist somit zur Sonnenbrille geworden, die im Aussehen der optischen Brille entspricht und bei der man auch nicht auf die Sehqualität verzichten muß.

Die kompakten Magnete in der Nasenbrücke der optischen Brille garantieren eine perfekte Auflage und Haltbarkeit durch die Gegenstücke in der Nasenbrücke des Sonnenclips und einen kleinen Ansatz zum Abstützen der Brücke des Sonnenclips.

Obwohl es sich also sowohl bei der optischen Brille als auch beim Sonnenclip um sogenannte "randlose Brillen" handelt, können diese beiden Teile optimal und formschön verbunden werden, ohne daß die Brille dadurch optische Einbußen erleidet.

### Kurzbeschreibung der Zeichnungen

- FIG 1.: Frontansicht der optischen Brille
- FIG 2.: Aufsicht auf die Nasenbrücke der optischen Brille
- FIG 3.: Frontansicht des Sonnenclips
- FIG 4.: Aufsicht auf die Nasenbrücke des Sonnenclips

### Detaillierte Beschreibung der Erfindung

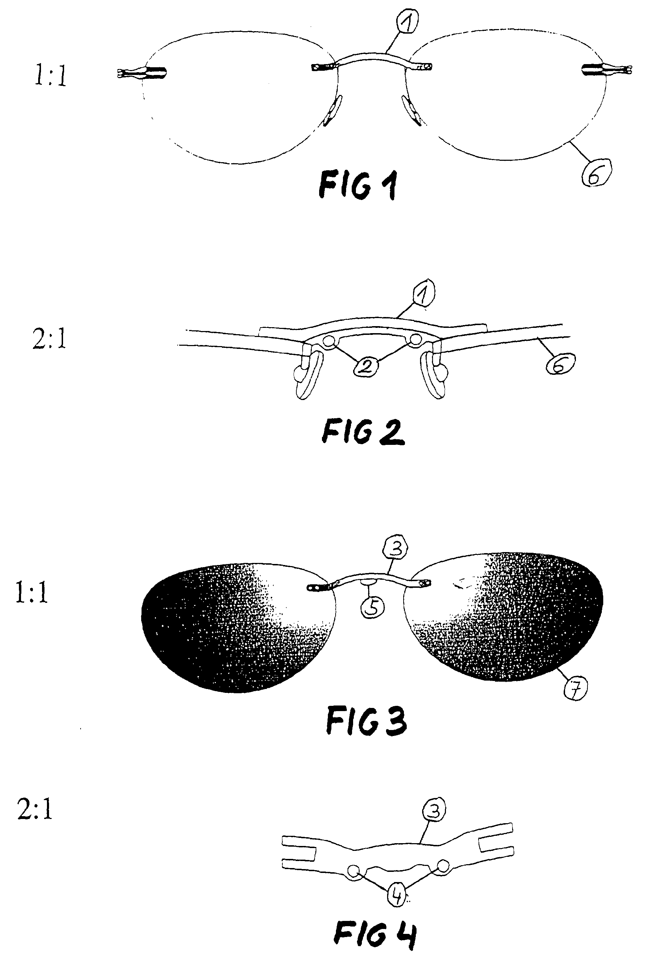

Bezugnehmend auf die Zeichnungen, beginnend mit FIG 1 und folgend.
An den Seiten der Oberfläche der Nasenbrücke der optischen Brille (1) sind zwei kreisrunde Ausnehmungen schräg gebohrt, in die die Magneten (2) eingepreßt sind.
Genauso werden in der Nasenbrücke des Sonnenclips (3) zwei kreisrunde Schrägbohrungen mit den selben Abmessungen geformt, in die die Gegenstücke zu den Magneten (4) eingepreßt werden.
Wenn der Sonnenclip auf die optische Brille gelegt wird liegen sich die Magneten (2;4) durch die genaue Position der Ausnehmungen genau gegenüber und eine starke magnetische Kraft kommt zur Wirkung, welchen den Sonnenclip fest auf der optischen Brille fixiert. Weiters hat die Nasenbrücke des Sonnenclips (3) einen kleinen Ansatz zum Abstützen der Brücke (5), der im zusammengefügten Zustand ein geringfügiges Verrutschen des Sonnenclips zusätzlich verhindert.

Die Scheibenformen der optischen Brille (6) und des Sonnenclips (7) sind identisch, so daß das Aussehen der Brille in keiner Weise gestört wird, ob der Sonnenclip nun aufgesetzt ist oder nicht. Das Abnehmen des Sonnenclips kann gänzlich ohne Werkzeuge geschehen, da die Nasenbrücke des Sonnenclips (3) mit der Nasenbrücke der optischen Brille (1) nur über die starke Anziehungskraft der Magneten (2;4) verbunden ist.

Die runden Magnete (2; 4) haben sehr kompakte Abmessungen von 1,5 mm Durchmesser x 1 mm Tiefe und haben durch ihr Material Neodymium eine sehr hohe Magnetfeldstärke. Diese kompakte Größe erlaubt eine sehr feine Ausführung der Nasenbrücken (1;3) ohne sie für die Aufnahme der Magneten (2;4) vergrößern zu müssen. Da die Magneten (2;4) vollständig in die Nasenbrücken eingepreßt sind hat die Brille immer ein sehr gutes Aussehen, egal ob der Sonnenclip angebracht ist oder nicht.

## Patentansprüche

1. Randlose optische Brille, die auf magnetische Weise mit einem randlosen Sonnenclip verbunden ist, **dadurch gekennzeichnet ist, daß**:
zwei runde Aufnahmelöcher an je beiden Seiten der Nasenbrücken (1;3) der optischen Brillen und des randlosen Sonnenclips vorhanden sind in die je ein runder Magnet (2;4) eingepreßt ist und die randlose Sonnenbrille auf der optischen Brille durch eine konzentrierte Magnetkraft haftet.

2. Optische Brillenstruktur nach Anspruch 1, **dadurch gekennzeichnet, daß** die Aufnahmen für die Magneten schräg gebohrt sind und die Magneten (2;4) daher auch schräg in die Nasenbrücken (1;3) eingesetzt werden.

3. Optische Brillenstruktur nach Anspruch 1, **dadurch gekennzeichnet, daß** die Magnete (2;4) eine Abmessung von 1,5 mm im Durchmesser und 1 mm in der Tiefe besitzen.

4. Optische Brillenstruktur nach Anspruch 1, **dadurch gekennzeichnet, daß** der Kombination der kleinen Abmessungen der Magneten (2;4) mit dem Ansatz zum Abstützen der Brücke (5) eine besondere Bedeutung zukommt.

5. Optische Brillenstruktur nach Anspruch 1, **dadurch gekennzeichnet, daß** das bezeichnete System auch für optische Vollrand-Brillenfassungen und optische Halbrand-Brillenfassungen angewendet werden kann.
